(19) Europäisches Patentamt

European Patent Office

Office européen des brevets

(11) **EP 1 217 199 B1**

(12) **EUROPÄISCHE PATENTSCHRIFT**

(45) Veröffentlichungstag und Bekanntmachung des Hinweises auf die Patenterteilung:
**02.03.2005 Patentblatt 2005/09**

(51) Int Cl.7: **F02M 25/07**

(21) Anmeldenummer: **00128038.7**

(22) Anmeldetag: **21.12.2000**

(54) **Mehrzylindrige Hubkolbenbrennkraftmaschine mit Abgasturbolader und Vorrichtung zur Abgasrückführung**

Multi-cylinder reciprocating internal combustion engine with exhaust gas turbocharger and exhaust gas recirculation device

Moteur à combustion interne à pistons alternatifs et à plusieurs cylindres avec turbocompresseur à gaz d'échappement et dispositif de recyclage des gaz d'échappement

(84) Benannte Vertragsstaaten:
**AT BE CH CY DE DK ES FI FR GB GR IE IT LI LU MC NL PT SE TR**

(43) Veröffentlichungstag der Anmeldung:
**26.06.2002 Patentblatt 2002/26**

(73) Patentinhaber: **MAN Steyr AG**
**4400 Steyr (AT)**

(72) Erfinder:
- **Rammer, Franz, Dipl.-Ing.**
  **4493 Wolfern (AT)**
- **Raab, Gottfried, Dipl.-Ing.**
  **4320 Perg (AT)**

(56) Entgegenhaltungen:
EP-A- 0 892 157      WO-A-00/53917
DE-A- 3 332 034      US-A- 4 249 382
US-A- 5 121 734      US-A- 5 802 846
US-B1- 6 220 233

- PATENT ABSTRACTS OF JAPAN vol. 1998, no. 11, 30. September 1998 (1998-09-30) & JP 10 169513 A (ISHIKAWAJIMA HARIMA HEAVY IND CO LTD), 23. Juni 1998 (1998-06-23)
- PATENT ABSTRACTS OF JAPAN vol. 007, no. 197 (M-239), 27. August 1983 (1983-08-27) -& JP 58 096159 A (NISSAN MOTOR CO LTD), 8. Juni 1983 (1983-06-08)

## Beschreibung

Die Erfindung betrifft gemäß dem Oberbegriff der Ansprüche 1 und 2 eine mehrzylindrige Hubkolbenbrennkraftmaschine mit Abgasturbolader und Vorrichtung zur Abgasrückführung (AGR) sowie mit wenigstens drei Zylindern je Zylinderreihe, die außerdem je Zylinder wenigstens ein Einlassventil in einem mit einer Ladeluftsammelleitung verbundenen Einlasskanal und wenigstens ein Auslassventil in einem mit einer Abgassammelleitung verbundenen Auslasskanal, ferner eine Abgasrückführleitung zwischen Abgassammelleitung und Ladeluftsammelleitung sowie Steuer- und Regelorgane für die Abgasrückführung aufweist.

Aus der JP 10169513 A ist eine mehrzylindrige Hubkolbenbrennkraftmaschine bekannt, die einen Abgasturbolader und eine Abgasrückführvorrichtung aufweist. Diese beinhaltet eine Abgasrückführleitung, die von einer Abgassammelleitung abzweigt und zu einer Ladeluftsammelleitung hinführt. In diese Abgasrückführleitung ist ein Absperrventil eingebaut. Außerdem ist in der Abgassammelleitung ein AGR-Steuerventil eingebaut, derart, dass das Abgas zweier Zylinder entweder rückführbar oder auch dem Abgasturbolader zuführbar ist. Zum weiteren Stand der Technik wird auf die JP58096159 verwiesen. Des besseren Verständnisses wegen sei nachfolgend auch noch auf die der Erfindung zugrundeliegende Problematik eingegangen.

Es ist bekannt, zur Reduzierung der $NO_x$-Emission von Verbrennungsmotoren deren Abgas zur Ansaugseite zurückzuführen. Für eine optimale Wirkung der Abgasrückführung ist es außerdem notwendig, das rückgeführte Abgas zu kühlen. Um aber bei mittels Abgasturbolader aufgeladenen Brennkraftmaschinen, insbesondere jenen mit Ladeluftkühlung, die Verschmutzung von Verdichter und Ladeluftkühler mit Rückständen des Abgases zu vermeiden, wird das Abgas bevorzugt vor der Turbine entnommen, gekühlt und nach dem Ladeluftkühler in den Ansaugtrakt eingeleitet. Im Betriebskennfeld einer Brennkraftmaschine gibt es aber viele Bereiche, in denen der mittlere Abgasgegendruck vor Turbine niedriger ist als der mittlere Ladedruck nach dem Ladeluftkühler. Dadurch würde in diesem Betriebsbereichen ohne zusätzliche Maßnahmen die Ladeluft in die Abgasleitung strömen und nicht, wie gewünscht, das Abgas zum Ansaugtrakt hin. Es sind nun verschiedene Methoden bekannt, mit denen verhindert wird, dass sich eine Strömung in falscher Richtung ausbildet und die auch gewährleisten, dass eine im Hinblick auf die gewünschte Absenkung der $NO_x$-Emission ausreichende Abgasmenge gegen das herrschende Druckgefälle zum Ausgangtrakt hin fließen kann. Bekannt ist hierfür der Einsatz spezieller Rückschlagventile, sogenannter AGR-Flatterventile, in der Abgasrückführleitung. Dabei werden die in der Abgasleitung auftretenden Druckspitzen ausgenützt, um das AGR-Flatterventil zu öffnen und das Abgas zur Ansaugseite hin strömen zu lassen. Wenn der Druck im Abgaskanal unter den Ladeluftdruck abfällt, verhindert das dann sperrende AGR-Flatterventil eine entsprechende Strömungsumkehr. Diese Abgasrückführung mittels AGR-Flatterventilen hat jedoch gewisse Nachteile. Je höher der Turboladerwirkungsgrad ist, desto größer ist der mittlere Druckunterschied zwischen Ladeluftdruck und Abgasgegendruck und desto kleiner wird die erzielbare Abgasrückführrate. Dies bedeutet, dass die durch optimale Turboladerauslegungen erreichbaren Verbesserungen im Kraftstoffverbrauch nicht realisiert werden können, weil dann keine optimierten Abgasrückführraten mehr dargestellt werden können. Außerdem sind die AGR-Flatterventile durch das rückgeführte Abgas thermisch hoch belastet, was einen sehr hohen Entwicklungsaufwand bedeutet, um die notwendig hohe Lebensdauer und Zuverlässigkeit für diese AGR-Flatterventile sicherstellen zu können. Nachteilig wirkt sich außerdem aus, dass bei Brüchen der wegen der hohen Dynamik notwendigerweise sehr filigranen AGR-Flatterventile deren wegbrechende Teile von der Brennkraftmaschine angesaugt werden, was eine erhebliche Gefahr von Motorschäden bedeutet. Außer den relativ hohen Entwicklungskosten sind auch die relativ teure und komplizierte Fertigung dieser AGR-Flatterventile als nachteilig zu erwähnen. Ein weiterer Nachteil ist, dass das Abgas vor einem Flatterventil gekühlt werden muss, um dessen Standzeit nicht zu reduzieren, weshalb für jeden Abgasstrang vor der Turbine eine separate Abgasrückführleitung mit eigenem AGR-Kühler, Flatterventil und Absperrorgan notwendig ist, um die gewünschten Abgasrückführraten zu erreichen.

Zur Abrundung des Standes der Technik sei noch auf die MTZ Motortechnische Zeitschrift 60 (1999) 4 Seiten 240, 242 verwiesen. Im Abschnitt 3.3 ist die Rede von einem Spenderzylinderkonzept. Dieses besteht darin, einen Zylinder ausschließlich für Abgasrückführung zu verwenden und das aus diesem Zylinder ausgestoßene Abgas über eine Abgasrückführleitung mit AGR-Kühler unmittelbar zur Ladeluftsammelleitung rückzuführen. Diese Lösung ist aus verschiedenen Gründen nicht sinnvoll, aber auch nicht praxisgerecht.

Es ist daher Aufgabe der Erfindung, für eine mehrzylindrige Hubkolbenbrennkraftmaschine der gattungsgemäßen Art eine Vorrichtung zur Abgasrückführung zu schaffen, die mit einfachen Mitteln darstellbar ist, ferner jene Probleme, die bisher in Verbindung mit AGR-Flatterventilen aufgetreten sind, beseitigt und außerdem eine Abgasrückführung mit hohen Abgasrückführraten ermöglicht. Dabei ist zu beachten, dass in bestimmten Betriebszuständen - beispielsweise im Motorbremsbetrieb, aber auch bei Beschleunigungsvorgängen der Brennkraftmaschine aus niedrigen Drehzahlen heraus, eine Abgasrückführung zu vermeiden ist.

Diese Aufgabe ist erfindungsgemäß durch eine Vorrichtung mit den in den Ansprüchen 1 und 2 angegebenen Merkmalen gelöst.

Vorteilhafte Ausgestaltungen und Details der erfindungsgemäßen Lösungen sind in den abhängigen Unteransprüchen gekennzeichnet.

Der Erfindung liegt dabei das Prinzip zugrunde, während der Abgasrückführbetriebsphasen wenigstens zwei Zylinder einer bzw. jeder Zylinderreihe als Spenderzylinder heranzuziehen und das aus diesen ausgestoßene Abgas zur Einlassseite der Brennkraftmaschine zurückzuführen, um vergleichsweise hohe Abgasrückführraten zu realisieren. Die erfindungsgemäße Vorrichtung kommt dabei vollständig ohne die bisher notwendigen, teuren und bruchempfindlichen AGR-Flatterventile aus. Es ist lediglich notwendig, in der Abgassammelleitung, gegebenenfalls auch der Abgasrückführleitung, an geeigneter Stelle entsprechend betätigbare Umschalt- und/oder Regelorgane vorzusehen, die mittels der Steuereinrichtung im erfindungsgemäßen Sinn einzustellen bzw. zu verstellen sind. Bei einem 6-Zylinder-Reihenmotor oder 12-Zylinder-V-Motor mit 2 Spenderzylindern je Zylinderreihe sind so z. B. maximale Abgasrückführraten in der Größenordnung von 30 % zu realisieren. Die erfindungsgemäße Vorrichtung erlaubt es, während Abgasrückführbetriebsphasen mit in entsprechenden Fixstellungen eingestellten Umschalt- und/oder Regelorganen fest vorgegebene Abgasrückführraten darzustellen, aber auch durch variable Verstellung der Umschaltund/oder Regelorgane unterschiedliche, bis nahe Null gehende Abgasrückführraten zu realisieren. Diese hohe Regelungstiefe gewährleistet, dass die Abgasrückführung immer mit einer an den jeweiligen Lastzustand der Brennkraftmaschine exakt angepassten, somit bedarfsoptimierten Abgasrückführraten durchführbar ist. In Nicht-AGR-Betriebsphasen dagegen steht generell das Abgas aller Zylinder zur Aufladung der Brennkraftmaschine zur Verfügung.

Nachstehend ist die erfindungsgemäße AGR-Vorrichtung anhand der Zeichnung näher erläutert. In dieser sind verschiedene Arten von Hubkolbenbrennkraftmaschinen in Verbindung mit verschiedenen Ausführungsmöglichkeiten der Abgasrückführvorrichtungen dargestellt. Dabei zeigt:

Fig. 1     schematisch eine 6-zylindrige Hubkolbenbrennkraftmaschine in Reihenbauart mit vierventiligen Zylindern und einer ersten Ausführungsform einer erfindungsgemäßen Vorrichtung,

Fig. 2     schematisch eine 12-Zylinder-V-Brennkraftmaschine mit einer erfindungsgemäßen Vorrichtung, die für beide Zylinderreihen weitestgehend jener der 6-Zylinder-Reihenbrennkraftmaschine von Fig. 1 entspricht,

Fig. 3     schematisch eine 6-zylindrige Hubkolbenbrennkraftmaschine in Reihenbauart mit vierventiligen Zylindern und einer zweiten Ausführungsform einer erfindungsgemäßen Vorrichtung, und

Fig. 4     schematisch eine 12-Zylinder-V-Brennkraftmaschine mit einer erfindungsgemäßen Vorrichtung, die für beide Zylinderreihen weitestgehend jener der 6-Zylinder-Reihenbrennkraftmaschine von Fig. 3 entspricht.

In den Figuren der Zeichnung sind gleiche bzw. einander entsprechende Teile der Übersichtlichkeit wegen mit gleichen Bezugszeichen angezogen.

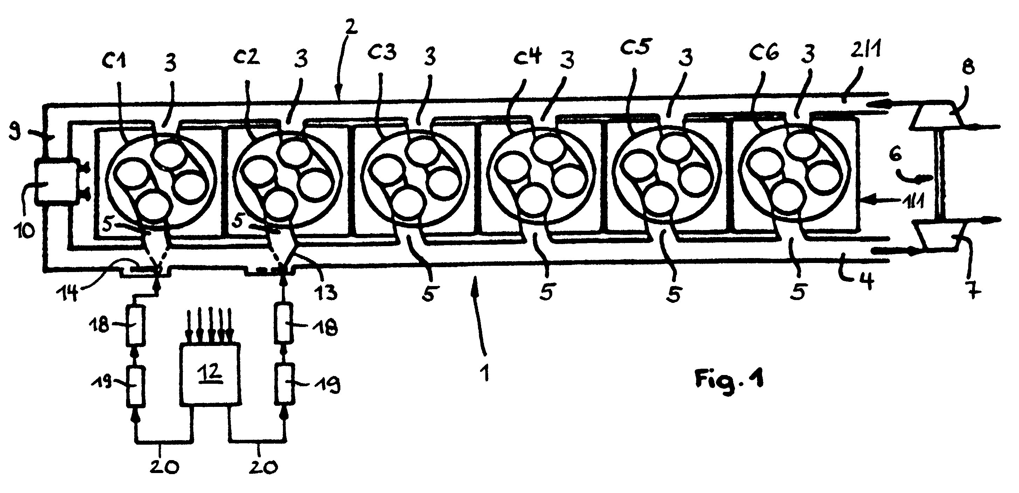

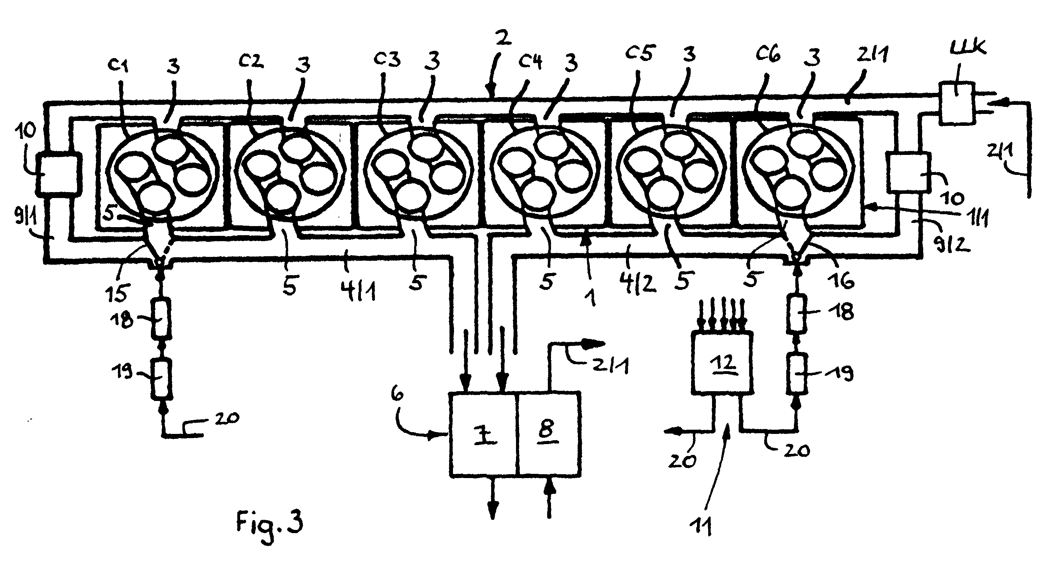

In den Figuren 1 und 3 sind die einzelnen Zylinder der dort dargestellten 6-zylindrigen Reihenhubkolbenbrennkraftmaschinen 1 mit C1, C2, C3, C4, C5 und C6 bezeichnet. Jeder dieser Zylinder weist zwei Einlassventile und zwei Auslassventile auf. Dabei sind die beiden Einlassventile jedes Zylinders C1 bis C6 im Zylinderkopf jeweils einem gemeinsamen, von einer Ladeluftsammelleitung 2 abzweigenden Einlasskanal 3 zugeordnet. Mit 4 ist eine Abgassammelleitung bezeichnet, in die mit 5 bezeichnete Auslasskanäle ausmünden, denen zylinderkopfintern jeweils die beiden Auslassventile eines Zylinders C1 bis C6 zugeordnet sind. Im Fall von Fig. 1 ist die Abgassammelleitung 4 einzügig zu einem Abgasturbolader 6 hinführend ausgebildet und an dessen Turbine 7 angeschlossen. Am Verdichter 8 des Abgasturboladers 6 ist die Ladeluftsammelleitung 2 angeschlossen. Obschon in Fig. 1 nicht dargestellt, kann in den zwischen dem Verdichter 8 und der Abzweigstelle des Einlasskanals 3 des strömungsmäßig erstfolgenden Zylinders - hier C6 - gegebenen Abschnitt 2/1 der Ladeluftsammelleitung 2 ein Ladeluftkühler LLK eingebaut sein, wie dies im Beispiel gemäß Fig. 3 gezeigt ist. Dort ist die Abgassammelleitung 4 außerdem nicht einzügig, sondern zweizügig, wobei die beiden Teilzüge mit 4/1 und 4/2 bezeichnet sind. In jeden dieser Teilzüge 4/1, 4/2 münden die Auslasskanäle 5 jeweils einer Gruppe von drei Zylindern C1 bis C3 und C4 bis C6 aus. Beide Teilzüge 4/1, 4/2 sind an der hier zweiflutigen Abgasturbine 7 des Abgasturboladers 6 angeschlossen. Der Abgasturbolader 6 kann dabei - wie dargestellt - seitlich oder alternativ hierzu auch hinten an der Brennkraftmaschine 1 angeordnet sein. Mit 9 ist in Fig. 1 eine Abgasrückführleitung bezeichnet, die die durchgängige Verbindung zwischen der Abgassammelleitung 4 und der Ladeluftsammelleitung 2 herstellt und in die lediglich ein AGR-Kühler 10 für Kühlung rückgeführten Abgases eingebaut ist. Im Beispiel von Fig. 3 zweigt eine zur Ladeluftsammelleitung 2 führende Abgasrückführleitung 9/1 mit eingebauten AGR-Kühler 10 von jenem Endbereich des Abgassammelleitungs-Teilzuges 4/1 ab, in das der Auslasskanal 5 des ersten Zylinders C1 einmündet. Vom gegenüberliegenden Endbereich des Abgassammelleitungs-Teilzuges 4/2 dagegen, in den der Auslasskanal 5 des letzten Zylinders C6 ausmündet, zweigt eine Abgasrückführleitung 9/2 mit eingebautem AGR-Kühler 10 ab, welche strömungsmäßig nach dem Ladeluftkühler LLK in den Ladeluftsammelleitungsabschnitt 2/1 ausmündet.

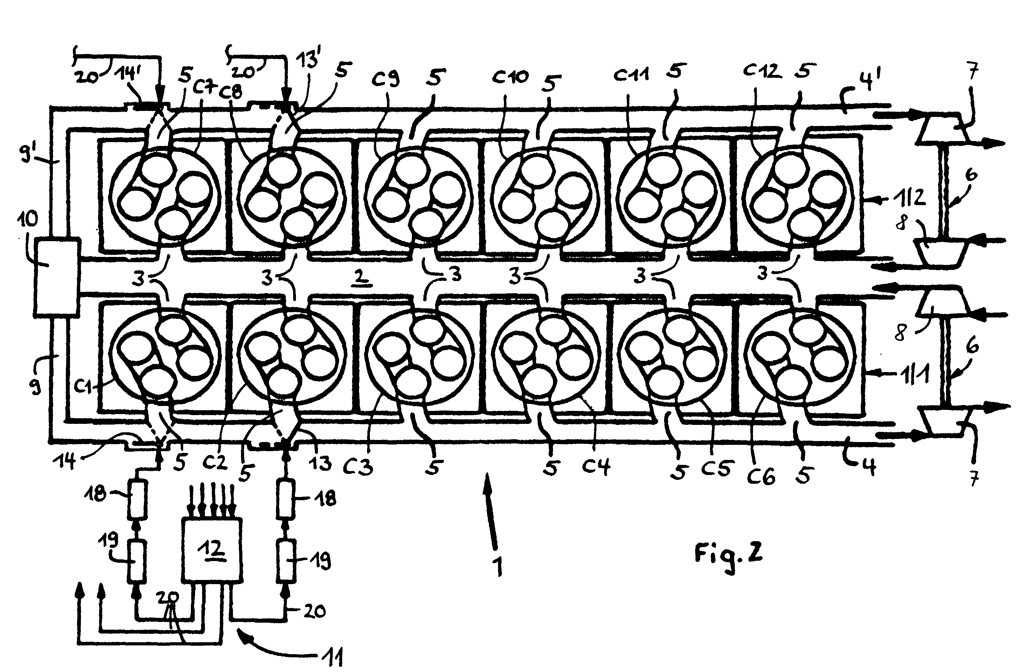

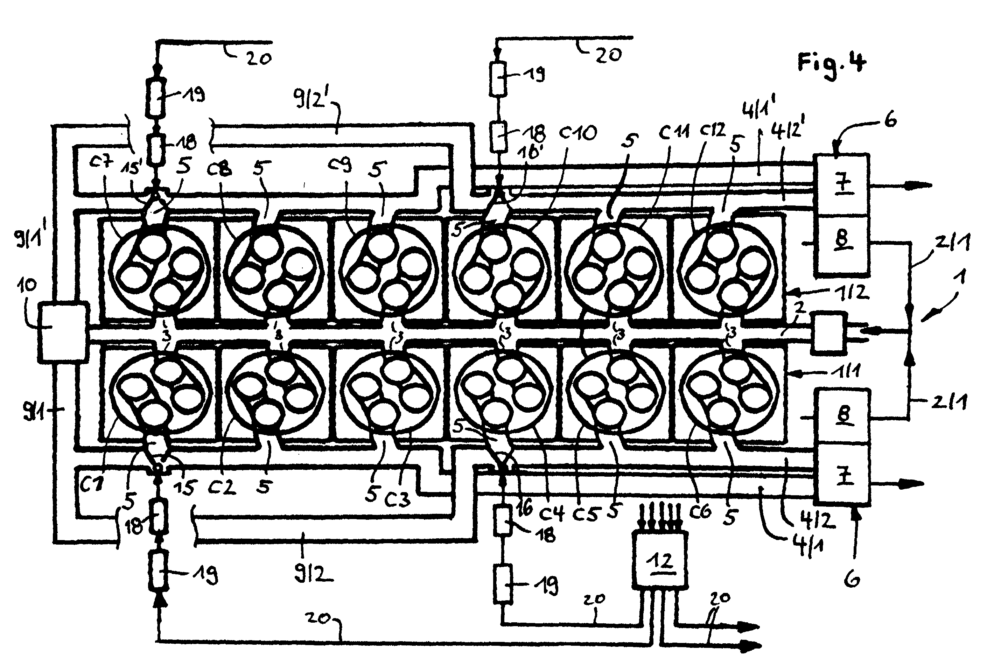

In den Figuren 2 und 4 ist anstelle einer Reihenmaschine jeweils eine V-Brennkraftmaschine 1 mit gegenüber jener von Fig. 1 und 3 verdoppelter Zylinderanzahl dargestellt. Die Zylinder von deren erster Zylinderreihe 1/1 sind mit C1 bis C6 und die Zylinder von deren zweiter Zylinderreihe 1/2 sind mit C7 bis C12 bezeichnet. Jede V-Brennkraftmaschine 1 weist eine zwischen den Zylinderreihen 1/1, 1/2 angeordnete gemeinsame Ladeluftsammelleitung 2 auf. Anstelle einer gemeinsamen einzügigen kann jedoch auch eine zweiflutige Ladeluftsammelleitung 2 vorgesehen, das heißt, jeder Zylinderreihe 1/1, 1/2 eine eigene einzügige Ladeluftsammelleitung 2 zugeordnet sein. Im Fall der Beispiele gemäß Fig. 2 und 4 sind die Abgasturbolader 6 jeweils stirnseitig hinten an der Brennkraftmaschine angeordnet. Dadurch ergibt sich im Fall von Fig. 4 eine gegenüber der vergleichbaren Reihenmaschine von Fig. 3 andere Leitungsführung der Abgassammelleitungs-Teilzüge 4/1, 4/2. Ansonsten sind bei den V-Brennkraftmaschinen 1 in jeder Zylinderreihe 1/1, 1/2, was die Anordnung der Abgassammelleitung 4, 4/1, 4/2 und die Abgasrückführleitung 9, 9/1, 9/2 anbelangt, im Wesentlichen spiegelbildliche Verhältnisse zu den vergleichbaren Reihenmaschinen der Figuren 1 und 3 gegeben. Deshalb und auch der Übersichtlichkeit wegen sind bei den V-Brennkraftmaschinen deren der zweiten Zylinderreihe 1/2 zugeordnete Bauteile mit gleichem Bezugszeichen, aber hochgesetztem Anstrich (') versehen. Abweichend von dieser Spiegelbildlichkeit münden im Fall von Fig. 4 die Abgasrückführleitungen 9/2, 9/2' in die Abgasrückführleitungen 9/1 bzw. 9/1' aus, so dass rückgeführtes Abgas generell im AGR-Kühler 10 kühlbar ist.

Diesen solchermaßen mit Abgasrückführleitungen 9, 9/1, 9/2 bzw. 9', 9/1', 9/2' ausgestatteten Brennkraftmaschinen 1 ist erfindungsgemäß jeweils eine AGR-Steuervorrichtung 11 mit derart im Abgasstrang angeordneten und durch Befehle einer Steuereinheit 12 in der Weise betätigbaren bzw. einstellbaren Umschalt- und/oder Regelorganen zugeordnet, dass während Abgasrückführbetriebsphasen das aus wenigstens zwei Zylindern einer bzw. jeder Zylinderreihe 1/1, 1/2 ausgestoßene Abgas vollständig oder teilweise mit eingestellter Abgasrückführrate über die Abgasrückführleitung 9, 9/1, 9/2, 9', 9/1', 9/2' zur Ladeluftsammelleitung 2 rückführbar ist, dagegen außerhalb dieser Abgasrückführbetriebsphasen das Abgas aller Zylinder der bzw. jeder Zylinderreihe 1/1, 1/2 vollständig dem Abgasturbolader 6 über die Abgassammelleitung 4, 4', 4/1, 4/1', 4/2, 4/2' zuführbar ist.

Bei den Brennkraftmaschinen der Figuren 1 und 2 weist die AGR-Steuervorrichtung 11 je Zylinderreihe 1/1, 1/2 zwei in die Abgassammelleitung 4, 4', eingebaute Umschalt- und/oder Regelorgane 13, 14, 13', 14' auf, wobei das erste (13, 13') je Zylinderreihe 1/1, 1/2 im Mündungsbereich des Auslasskanals 5 des zweiten Zylinders C2, C8 und das zweite (14, 14') je Zylinderreihe 1/1, 1/2 im Mündungsbereich des Auslasskanals 5 des ersten Zylinders C1, C7, von dem auch die Abgasrückführleitung 9, 9' abzweigt, in die Abgassammelleitung 4, 4' eingebaut ist.

Die Umschalt- und/oder Regelorgane 13, 13', 14, 14' sind durch Befehle der Steuereinheit 12 in zwei verschiedene Endstellungen und wenigstens eine Zwischenposition einstellbar.

Dabei sind drei verschiedene Anwendungsfälle und Funktionen der Umschalt- und/oder Regelorgane 13, 13', 14, 14' möglich, wie folgt:

Variante a) Regelorgan 13, 13' und Umschaltorgan 14, 14'

Variante b) Regelorgan 13, 13' und Regelorgan 14, 14'

Variante c) Umschaltorgan 13, 13' und Umschaltorgan 14, 14'.

Im Fall von Variante a) ist das Umschaltorgan 14, 14' durch Befehle der Steuereinheit 12 außerhalb von Abgasrückführbetriebsphasen in eine die Abgasrückführleitung 9, 9' absperrende Zwischenposition (gestrichelt dargestellte mittlere Position) eingestellt. Während Abgasrückführbetriebsphasen dagegen ist das Umschaltorgan 14, 14' - je nach dem, wie hoch die Abgasrückführrate sein soll bzw. ob das Abgas nur des ersten Zylinders C1, C7 oder das Abgas des jeweils ersten und zweiten Zylinders C1, C2, C7, C8 rückgeführt werden soll - entweder in seine erste (gestrichelt gezeichnete) Endstellung, in der nur das Abgas des jeweils ersten Zylinders C1, C7 je Zylinderreihe rückführbar ist, oder in seine zweite Endstellung (wie durchgezogen dargestellt) einstellbar, in der dann das Abgas des ersten und zweiten Zylinders C1, C2, C7, C8 rückführbar ist.

Das Regelorgan 13, 13' ist im Fall von Variante a) durch Befehle der Steuereinheit 12 in zwei verschiedene Endstellungen und wenigstens eine Zwischenposition einstellbar. Dabei wird bzw. ist die erste Endstellung (= gestrichelte waagrechte Einstellposition) außerhalb von Abgasrückführbetriebsphasen eingestellt, so dass bei abgesperrter Abgasrückführleitung 9, 9' das aus allen Zylindern der bzw. jeder Zylinderreihe 1/1, 1/2 der Brennkraftmaschine 1 ausgestoßene Abgas vollständig über die auf Durchlass geschaltete Abgassammelleitung 4, 4' dem Abgasturbolader 6 zugeführt wird. Die zweite Endstellung des Regelorgans 13, 13' dagegen wird bzw. ist während Abgasrückführbetriebsphasen eingestellt. Diese zweite Endstellung ist in Fig. 1 und 2 durchgezogen dargestellt. In dieser zweiten Endstellung ist die Abgassammelleitung 4, 4' an der Einmündungsstelle des Auslasskanals 5 des zweiten Zylinders C2, C8 der bzw. jeder Zylinderreihe 1/1, 1/2 zum Abgasturbolader 6 hin abgesperrt, so dass bei gleichzeitig auf Volldurchlass geschaltetem Umschaltorgan 14, 14' das Abgas aus dem ersten (C1, C7) und zweiten Zylinder C2, C8 der bzw. jeder Zylinderreihe 1/1, 1/2 vollständig über die Abgasrückführleitung 9, 9' zur Ladeluftsammelleitung 2 rückführbar ist. Letzteres bedeutet eine maximale Abgasrückführrate. In einer bei Variante a) ebenfalls während Abgasrückführbetriebsphasen einstellbaren ersten fixen Zwischenposition des Regelorgans 13, 13' (= gestrichelte Mittelposition) ist die Abgassammelleitung 4, 4' zwischen erstem (C1, C7) und zweitem Zylinder C2, C8 der Zylinderreihe 1/1 bzw. einer oder beider Zylinderreihen 1/1, 1/2 abgesperrt, so dass im Fall von Fig. 1 nur das Abgas des ersten Zylinders C1, im Fall von Fig. 2 dagegen das Abgas entweder nur des Zylinders C1 oder jedes der Zylinder C1 und C7 bei gleichzeitig auf Volldurchlass geschaltetem Umschaltorgan 14, 14' vollständig zur Ladeluftsammelleitung 2 rückgeführt wird. Die Abgasrückführrate ist demzufolge entsprechend niedriger als im vorgeschilderten Fall mit in zweiter Endstellung gegebenen Regelorgan 13, 13'. Außerdem besteht die Möglichkeit, das Regelorgan 13, 13' während Abgasrückführbetriebsphasen in weitere Zwischenpositionen zwischen der ersten, fixen Zwischenposition und einer der beiden Endstellungen einzustellen, so dass ein Teil des aus dem ersten (C1, C7) Zylinder und zweiten Zylinder C1, C8 der bzw. einer oder jeder Zylinderreihe 1/1, 1/2 ausgestoßenen Abgases in der Abgassammelleitung 4, 4' gezielt gedrosselt bzw. abgezweigt zum Abgasturbolader 6 hin durchgelassen wird, der andere Teil des aus den genannten Zylindern C1, C7, C2, C8 austretenden Abgases dagegen zur Ladeluftsammelleitung 2 rückgeführt wird.

Im Fall der Variante b) ist das Regelorgan 14, 14' durch Befehle der Steuereinheit 12 außerhalb von Abgasrückführbetriebsphasen in eine die Abgasrückführleitung 9, 9' absperrende Zwischenposition (= gestrichelte Mittelposition) eingestellt. Während Abgasrückführbetriebsphasen dagegen ist das Regelorgan 14, 14' - je nach dem, wie hoch die Abgasrückführrate sein soll bzw. ob das Abgas nur des ersten Zylinders C1, C7 oder das Abgas des jeweils ersten und zweiten Zylinders C1, C2, C7, C8 rückgeführt werden soll - entweder in seine erste (gestrichelt gezeichnete) Endstellung, in der nur das Abgas des jeweils ersten Zylinders C1, C7 je Zylinderreihe 1/1, 1/2 rückführbar ist, oder in seine zweite Endstellung (wie durchgezogen dargestellt), in der das Abgas sowohl des ersten und zweiten Zylinders C1, C2, C7, C8 je Zylinderreihe 1/1, 1/2 rückführbar ist, oder in Drosselpositionen zwischen zweiter Endstellung und der festen Zwischenposition einstellbar, wodurch sich die Abgasrückführrate fein einstellen lässt.

Das Regelorgan 13, 13' ist im Fall von Variante b) durch Befehle der Steuereinheit 12 gleich wie jenes von Variante a) einstellbar.

Im Fall von Variante c) ist das Umschaltorgan 14, 14' durch Befehle der Steuereinheit 12 wie jenes von Variante a) schaltbar. Außerdem ist im Fall der Variante c) das Umschaltorgan 13, 13' durch Befehle der Steuereinheit 12 in zwei verschiedene Endstellungen und eine Zwischenposition einstellbar. Dabei wird bzw. ist die erste Endstellung (= gestrichelte waagrechte Einstellposition) außerhalb von Abgasrückführbetriebsphasen eingestellt, so dass bei abgesperrter Abgasrückführleitung 9, 9' das aus allen Zylindern der bzw. jeder Zylinderreihe 1/1, 1/2 der Brennkraftmaschine 1 ausgestoßene Abgas vollständig über die auf Durchlass geschaltete Abgassammelleitung 4, 4' dem Abgasturbolader 6 zugeführt wird. Die zweite Endstellung des Umschaltorgans 13, 13' dagegen wird bzw. ist während Abgasrückführbetriebsphasen eingestellt. Diese zweite Endstellung ist in Fig. 1 und 2 durchgezogen dargestellt. In dieser zweiten Endstellung ist die Abgassammelleitung 4, 4' an der Einmündungsstelle des Auslasskanals 5 des zweiten Zylinders C2, C8 der bzw. jeder Zylinderreihe 1/1, 1/2 zum Abgasturbolader 6 hin abgesperrt, so dass bei gleichzeitig auf Volldurchlass geschaltetem Umschaltorgan 14, 14' das Abgas aus dem ersten (C1, C7) und zweiten Zylinder C2, C8 der bzw. jeder Zylinderreihe 1/1, 1/2 vollständig über die Abgasrückführleitung 9, 9' zur Ladeluftsammelleitung 2 rückführbar ist. Letzteres bedeutet eine maximale Abgasrückführrate. In einer bei Variante c) ebenfalls während Abgasrückführbetriebsphasen einstellbaren ersten fixen Zwischenposition des Umschaltorgans 13, 13' (= gestrichelte Mittelposition) ist die Abgassammelleitung 4, 4' zwischen erstem (C1, C7) und zweitem Zylinder C2, C8 der Zylinderreihe 1/1 bzw. einer oder beider Zylinderreihen 1/1, 1/2 abgesperrt, so dass im Fall von Fig. 1 nur das Abgas des ersten Zylinders C1, im Fall von Fig. 2 dagegen das Abgas entweder nur des Zylinders C1 oder jedes der Zylinder C1 und C7 bei gleichzeitig auf Volldurchlass geschaltetem Umschaltorgan 14, 14' vollständig zur Ladeluftsammelleitung 2 rückgeführt wird. Die Abgasrückführrate ist demzufolge entsprechend niedriger als im vorgeschilderten Fall mit in zweiter Endstellung gegebenen Umschaltorgan 13, 13'.

Bei den Brennkraftmaschinen der Figuren 3 und 4 weist die AGR-Steuervorrichtung 11 je Zylinderreihe 1/1, 1/2 zwei Umschalt- und/oder Regelorgane 15, 15', 16, 16' auf. Dabei ist das erste Umschalt- und/oder Regelorgan 15, 15' im Mündungsbereich des Auslasskanals 5 des ersten Zylinders C1, C7 der bzw. jeder Zylinderreihe 1/1, 1/2 und der zugeordneten Abgassammelleitung 4/1, 4/1' in diese eingebaut. Das zweite Umschalt- und/oder Regelorgan 16, 16' ist im Mündungsbereich des Auslasskanals 5 des letzten Zylinders C6 (Fig. 3) oder jeweils vierten Zylinders C4, C10 (Fig. 4) der bzw. jeder Zylinderreihe 1/1, 1/2 und der zugeordneten Abgassammelleitung 4/2, 4/2' in diese eingebaut angeordnet. Auch in diesen Fällen ist jedes der Umschalt- und/oder Regelorgane 15, 15', 16, 16' durch Befehle der Steuereinheit 12 in zwei verschiedene Endstellungen, vorzugsweise aber auch in wenigstens eine Zwischenposition zwischen den beiden Endstellungen einstellbar. Die erste Endstellung der Umschalt- und/oder Regelorgane 15, 15', 16, 16' (siehe die durchgezogene Darstellung in Fig. 3 und 4) wird bzw. ist jeweils außerhalb von Abgasrückführbetriebsphasen eingestellt, wobei das aus allen Zylindern der bzw. jeder Zylinderreihe 1/1, 1/2 ausgestoßene Abgas vollständig über die Abgassammelleitungs-Teilzüge 4/1, 4/1', 4/2, 4/2' dem Abgasturbolader 6 zugeführt. Während Abgasrückführbetriebsphasen dagegen werden bzw. sind die Umschalt- und/oder Regelorgane 15, 15', 16, 16' alle oder nur ein Teil derselben in eine zweite Endstellung eingestellt. In dieser zweiten Endstellung ist die Abgassammelleitung 4/1, 4/1', 4/2, 4/2' an der Einmündungsstelle des Auslasskanals 5 des ersten und letzten Zylinders C1, C6 (bei Fig. 3) bzw. und vierten Zylinders C1, C4, C7, C10 (bei Fig. 4) der bzw. jeder Zylinderreihe 1/1, 1/2 zum Abgasturbolader 6 hin abgesperrt, so dass das aus den Zylindern C1 und/oder C6 (Fig. 3) bzw. C1, C4, C7, C10 (Fig. 4) der bzw. jeder Zylinderreihe 1/1, 1/2 ausgestoßene Abgas vollständig über die Abgasrückführleitung 9/1, 9/1', 9/2, 9/2' zur Ladeluftsammelleitung 2 rückführbar ist. Dies bedeutet, dass im Fall der Brennkraftmaschine gemäß Fig. 3 entweder zwei Zylinder C1, C6 oder nur einer dieser beiden Zylinder als Spenderzylinder für die Abgasrückführung fungiert, mithin eine Abgasrückführung mit einer Abgasrückführrate von entweder ca. 33 % oder ca. 16 % durchführbar ist. Im Fall der V-Brennkraftmaschine gemäß Fig. 4 können entweder alle vier genannten Zylinder C1, C4, C7, C10 oder nur drei oder zwei oder einer derselben als Spenderzylinder für die Abgasrückführung fungieren, so dass die Abgasrückführung mit einer Abgasrückführrate von ca. 33 % oder ca. 25 % oder ca. 16 % oder ca. 8 % durchführbar ist. Falls zwischen diesen einzelnen Werten aber auch darunter liegende Abgasrückführraten dargestellt werden sollen, besteht die Möglichkeit, während der Abgasrückführbetriebsphasen jedes der Umschalt- und/oder Regelventile 15, 15', 16, 16' in eine Zwischenposition zwischen seinen beiden Endstellungen einzustellen, mit der Folge, dass ein Teil des aus dem Zylinder C1 und/oder C6 (Fig. 3) bzw. C1 und/oder C4 und/oder C7 und/oder C10 (Fig. 4) der bzw. jeder Zylinderreihe 1/1, 1/2 austretenden Abgases in der Abgassammelleitung 4/1, 4/1', 4/2, 4/2' gezielt gedrosselt bzw. abgezweigt zum Abgasturbolader 6 hin durchgelassen wird, dagegen der andere Teil des aus besagten Zylindern austretenden Abgases zur Ladeluftsammelleitung 2 rückgeführt wird.

Allen Varianten ist gemeinsam, dass jedem Umschalt- und/oder Regelorgan 13, 13', 14, 14', 15, 15', 16, 16' ein zu dessen Ein- bzw. Verstellung dienender elektrischer, hydraulischer oder pneumatischer Stellmotor 18 mit Motortreiberteil 19 als Teil der AGR-Steuervorrichtung 11 zugeordnet ist. Jeder Motortreiberteil 19 erhält seine Steuerbefehle von der Steuereinheit 12 über eine Steuerleitung 20 zugeführt. Die Steuereinheit 12 ist elektronischer Bauart und weist einen Mikroprozessor sowie Daten- und Programmspeicher mit darin abgelegtem Steuerprogramm und Betriebs- sowie Kennfelddaten auf, welche letztere auf den Typ der zugeordneten Brennkraftmaschine 1 abgestimmt sind sowie den Steuer- bzw. Regelalgorithmus und die Zeitpunkte vorgeben, wann, wie, in welchen Betriebsphasen bzw. weichen Betriebszuständen der Brennkraftmaschine eine Abgasrückführung mit welchen einstellbaren Abgasrückführraten durchgeführt oder unterbunden werden soll.

Mit einer wie vorbeschriebenen AGR-Vorrichtung der erfindungsgemäßen Art ausgestatteten Brennkraftmaschine lassen sich folgende Betriebsweisen realisieren. Die Abgasrückführung wird nur während bestimmter Betriebsphasen oder -zustände der Brennkraftmaschine 1 zugelassen. Durch entsprechende Einstellung der Umschalt- und/oder Regelorgane 13, 13', 14, 14', 15, 15', 16, 16' wird während der Abgasrückführbetriebsphasen nur das aus wenigstens zwei Zylindern der bzw. jeder Zylinderreihe 1/1, 1/2 ausgestoßene Abgas vollständig oder teilweise mit eingestellter Abgasrückführrate über die Abgasrückführleitung zur Abgassammelleitung 2 rückgeführt, diese Abgasrückführung dagegen außerhalb von Abgasrückführbetriebsphasen unterbunden und das aus den vorherigen AGR-Spenderzylindern ebenso wie jenes aus den anderen Zylindern ausgestoßene Abgas vollständig dem Abgasturbolader 6 über die Abgassammelleitung zugeführt. Das heißt, während Abgasrückführbetriebsphasen können wenigstens zwei Zylinder je Zylinderreihe der Brennkraftmaschine als Spenderzylinder für rückzuführendes Abgas herangezogen werden. Die maximale Abgasrückführrate ergibt sich dann bei 2 Spenderzylindern je Zylinderreihe etwa aus der Formel

$$\frac{100 \times 2}{Zylinderanzahl\ je\ Zylinderreihe}[\%]$$

Demgegenüber kleinere Abgasrückführraten sind durch entsprechend andere Einstellungen der Umschalt- und/oder Regelorgane 13, 13', 14, 14', 15, 15', 16, 16', wie weiter vom anhand der verschiedenen Vorrichtungen beschrieben, erzielbar.

Abschließend ist anzumerken, dass als Spenderzylinder für die Abgasrückführung auch andere als die in vorgenannten Beispielen erwähnten Zylinder dienen können, was selbstverständlich dann auch eine andere Anordnung der Umschalt- und/oder Regelorgane sowie gegebenenfalls auch eine andere Abzweigstelle der Abgasrückführleitung(en) zur Folge hat. Die für eine Abgasrückführung geeigneten Spenderzylinder können auch im Hinblick auf die Zündfolge in der jeweiligen Brennkraftmaschine ausgewählt sein.

**Patentansprüche**

1.  Mehrzylindrige Hubkolbenbrennkraftmaschine (1) mit Abgasturbolader (7,8) und Vorrichtung zur Abgasrückführung sowie mit wenigstens drei Zylindern (C1-C6, C7-C12) je Zylinderreihe (1/1, 1/2) die außerdem je Zylinder wenigstens ein Einlassventil in einem mit einer Ladeluftsammelleitung (2) verbundenen Einlasskanal (3) und wenigstens ein Auslassventil in einem mit einer Abgassammelleitung (4) verbundenen Auslasskanal (5) ferner eine Abgasrückführleitung (9,9') zwischen Abgassammelleitung (4) und Ladeluftsammelleitung (2) sowie Steuer- und Regelorgane (13,13',14,14') für die Abgasrückführung aufweist, **gekennzeichnet durch** eine Abgasrückführungs-Steuervorrichtung (11) mit je Zylinderreihe (1/1, 1/2) zwei Umschalt- und/oder Regelorganen (13, 13', 14, 14'), wobei das erste (13, 13') je Zylinderreihe (1/1, 1/2) in die Abgassammelleitung (4, 4'), dort im Mündungsbereich des Auslasskanals (5) des zweiten Zylinders (C2, C8), und das zweite (14, 14') je Zylinderreihe (1/1, 1/2) im Mündungsbereich des Auslasskanals (5) des ersten Zylinders (C1, C7), von dem auch die Abgasrückführleitung (9, 9') abzweigt, in die Abgassammelleitung (4, 4') eingebaut ist, und dass jedes dieser derart im Abgasstrang angeordneten Umschalt- und/oder Regelorgane (13, 13', 14, 14') **durch** Befehle einer Steuereinheit (12) in der Weise betätig- bzw. einstellbar ist, dass während Abgasrückführbetriebsphasen das aus wenigstens zwei Zylindern einer bzw. jeder Zylinderreihe (1/1, 1/2) ausgestoßene Abgas vollständig oder teilweise mit eingestellter Abgasrückführrate über die Abgasrückführleitung (9, 9') zur Ladeluftsammelleitung (2) rückführbar ist, dagegen außerhalb dieser Abgasrückführbetriebsphasen das Abgas aller Zylinder der bzw. jeder Zylinderreihe (1/1, 1/2) vollständig dem Abgasturbolader (6) über die Abgassammelleitung (4, 4') zuführbar ist.

2. Mehrzylindrige Hubkolbenbrennkraftmaschine (1) mit Abgasturbolader (7,8) und Vorrichtung zur Abgasrückführung sowie mit wenigstens drei Zylindern (C1-C6, C7-C12) je Zylinderreihe (1/1, 1/2) die außerdem je Zylinder wenigstens ein Einlassventil in einem mit einer Ladeluftsammelleitung (2) verbundenen Einlasskanal (3) und wenigstens ein Auslassventil in einem mit einer Abgassammelleitung (4) verbundenen Auslasskanal (5) ferner eine Abgasrückführleitung (3/1, 3/1', 3/2, 3/2') zwischen Abgassammelleitung (4) und Ladeluftsammelleitung (2) sowie Steuer- und Regelorgane (15, 15', 16, 16') für die Abgasrückführung aufweist, **gekennzeichnet durch** eine Abgasrückführungs-Steuervorrichtung (11) mit je Zylinderreihe (111, 1/2) zwei Umschalt- und/oder Regelorganen (15, 15', 16, 16'), von denen das erste (15, 15') im Mündungsbereich des Auslasskanals (5) des ersten Zylinders (C1, C7) und der zugeordneten Abgassammelleitung (4/1, 4/1') und das zweite (16, 16') im Mündungsbereich des Auslasskanals (5) des letzten (C6) oder jeweils vierten Zylinders (C4, C10) der bzw. jeder Zylinderreihe (1/1, 1/2) und der zugeordneten Abgassammelleitung (4/2, 4/2') in diese eingebaut ist, und dass jedes dieser derart im Abgasstrang angeordneten Unschalt- und/oder Regelorgane (15, 15', 16, 16') **durch** Befehle einer Steuereinheit (12) in der Weise betätig- bzw. einstellbar sind, dass während Abgasrückführbetriebsphasen das aus wenigstens zwei Zylindern einer bzw. jeder Zylinderreihe (1/1, 1/2) ausgestoßene Abgas vollständig oder teilweise mit eingestellter Abgasrückführrate über die Abgasrückführleitung (9, 9', 9/1, 9/1', 9/2, 9/2') zur Ladeluftsammelleitung (2) rückführbar ist, dagegen außerhalb dieser Abgasrückführbetriebsphasen das Abgas aller Zylinder der bzw. jeder Zylinderreihe (1/1, 1/2) vollständig dem Abgasturbolader (6) über die Abgassammelleitung (4/1, 4/1', 412, 4/2') zuführbar ist.

3. Hubkolbenbrennkraftmaschine nach Anspruch 1, **dadurch gekennzeichnet, dass** die Umschalt- und/oder Regelorgane (13, 13', 14, 14') durch Befehle der Steuereinheit (12) in zwei verschiedene Endstellungen und wenigstens eine Zwischenposition einstellbar sind.

4. Hubkolbenbrennkraftmaschine nach Anspruch 3, **dadurch gekennzeichnet, dass** die Umschalt- und/oder Regelorgane (13, 13', 14, 14') in verschiedenen Anwendungsfällen verschiedene Funktionen haben, nämlich wie folgt:

   Variante a) Regelorgan (13, 13') und Umschaltorgan (14, 14')

   Variante b) Regelorgan (13, 13') und Regelorgan (14, 14')

   Variante c) Umschaltorgan (13, 13') und Umschaltorgan (14, 14').

5. Hubkolbenbrennkraftmaschine nach Anspruch 4, **dadurch gekennzeichnet, dass** im Fall der Varianten a) und c) das Umschaltorgan (14, 14') durch Befehle der Steuereinheit (12) außerhalb von Abgasrückführbetriebsphasen in eine die Abgasrückführleitung (9, 9') absperrende Zwischenposition eingestellt ist, dagegen während Abgasrückführbetriebsphasen - je nach dem, wie hoch die Abgasrückführrate sein soll bzw. ob das Abgas nur des ersten Zylinders (C1, C7) oder das Abgas des jeweils ersten und zweiten Zylinders (C1, C2, C7, C8) rückgeführt werden soll - entweder in seine erste Endstellung, in der nur das Abgas des jeweils ersten Zylinders (C1, C7) je Zylinderreihe (1/1, 1/2) rückführbar ist, oder in seine zweite Endstellung einstellbar ist, in der dann das Abgas des ersten und zweiten Zylinders (C1, C2, C7, C8) je Zylinderreihe (1/1, 1/2) rückführbar ist.

6. Hubkolbenbrennkraftmaschine nach Anspruch 4, **dadurch gekennzeichnet, dass** im Fall der Variante b) das Regelorgan (14, 14') durch Befehle der Steuereinheit (12) außerhalb von Abgasrückführbetriebsphasen in eine die Abgasrückführleitung (9, 9') absperrende Zwischenposition eingestellt ist, dagegen während Abgasrückführbetriebsphasen - je nach dem, wie hoch die Abgasrückführrate sein soll bzw. ob das Abgas nur des ersten Zylinders (C1, C7) oder das Abgas des jeweils ersten und zweiten Zylinders (C1, C2, C7, C8) rückgeführt werden soll - entweder in seine erste Endstellung, in der nur das Abgas des jeweils ersten Zylinders (C1, C7) je Zylinderreihe (1/1, 1/2) rückführbar ist, oder in seine zweite Endstellung, in der das Abgas sowohl des ersten als auch zweiten Zylinders (C1, C2, C7, C8) je Zylinderreihe (1/1, 1/2) rückführbar ist, oder zur Feineinstellung der Abgasrückführrate in eine Drosselposition zwischen zweiter Endstellung und fester Zwischenposition einstellbar ist.

7. Hubkolbenbrennkraftmaschine nach den Ansprüchen 4 bis 6, **dadurch gekennzeichnet, dass** im Fall der Varianten a) und b) das Regelorgan (13, 13') durch Befehle der Steuereinheit (12) in zwei verschiedene Endstellungen und wenigstens eine Zwischenposition einstellbar ist, wobei

   - die erste Endstellung außerhalb von Abgasrückführbetriebsphasen eingestellt ist und dabei bei abgesperrter Abgasrückführleitung (9, 9') das aus allen Zylindern der bzw. jeder Zylinderreihe (1/1, 1/2) ausgestoßene Abgas vollständig über die auf Durchlass geschaltete Abgassammelleitung (4, 4') dem Abgasturbolader (6) zugeführt wird,

   - die zweite Endstellung während Abgasrückführbetriebsphasen eingestellt ist und dabei die Abgassammelleitung (4, 4') an der Einmündungsstelle des Auslasskanals (5) des zweiten Zylinders (C2, C8) der bzw. jeder Zylinderreihe (1/1, 1/2) zum Abgasturbolader (6) hin abgesperrt ist, so dass bei gleichzeitig auf Volldurchlass geschaltetem Umschaltorgan (14, 14') das Abgas aus dem ersten (C1, C7) und zweiten Zylinder (C2, C8) der bzw. jeder Zylinderreihe (1/1, 1/2) vollständig zur Ladeluftsammelleitung (2) rückführbar ist,

   - in einer ersten Zwischenposition, die ebenfalls während Abgasrückführbetriebsphasen eingestellt ist, die Abgassammelleitung (4, 4') zwischen erstem (C1, C7) und zweitem Zylinder (C2, C8) der bzw. einer oder jeder Zylinderreihe (1/1, 1/2) abgesperrt ist, so dass bei gleichzeitig auf Volldurchlass geschaltetem Umschaltorgan (14, 14') das Abgas des ersten Zylinders (C1, C7) der bzw. jeder Zylinderreihe (1/1, 1/2) vollständig zur Ladeluftsammelleitung (2) rückführbar ist, dagegen das Abgas des zweiten Zylinders (C2, C8) der Zylinderreihe vollständig in die Abgassammelleitung (4, 4') einleitbar und ebenso wie jenes der folgenden Zylinder der bzw. jeder Zylinderreihe (1/1, 1/2) dem Abgasturbolader (6) zuführbar ist,

   - in weiteren Zwischenpositionen, die ebenfalls während Abgasrückführbetriebsphasen zwischen der ersten Zwischenposition und einer der beiden Endstellungen eingestellt sein können, ein Teil des aus dem ersten (C1, C7) und zweiten Zylinder (C2, C8) der bzw. jeder Zylinderreihe (1/1, 1/2) austretenden Abgases in der Abgassammelleitung (4, 4') gezielt gedrosselt bzw. abgezweigt zum Abgasturbolader (6) hin durchgelassen, der andere Teil des aus dem ersten (C1, C7) und zweiten Zylinder (C2, C8) der bzw. jeder Zylinderreihe (1/1, 1/2) austretenden Abgases dagegen zur Ladeluftsammelleitung (2) rückgeführt wird.

8. Hubkolbenbrennkraftmaschine nach den Ansprüchen 4 und 5, **dadurch gekennzeichnet, dass** im Fall der Variante c) das Umschaltorgan (13, 13') durch Befehle der Steuereinheit (12) in zwei verschiedene Endstellungen und eine Zwischenposition einstellbar, wobei

   - die erste Endstellung außerhalb von Abgasrückführbetriebsphasen eingestellt ist, so dass bei abgesperrter Abgasrückführleitung (9, 9') das aus allen Zylindern der bzw. jeder Zylinderreihe (1/1, 1/2) ausgestoßene Abgas vollständig über die auf Durchlass geschaltete Abgassammelleitung (4, 4') dem Abgasturbolader (6) zugeführt wird,

   - die zweite Endstellung während Abgasrückführbetriebsphasen eingestellt ist, so dass die Abgassammelleitung (4, 4') an der Einmündungsstelle des Auslasskanals (5) des zweiten Zylinders (C2, C8) der bzw. jeder Zylinderreihe (1/1, 1/2) zum Abgasturbolader (6) hin abgesperrt ist und bei gleichzeitig auf Volldurchlass geschaltetem Umschaltorgan (14, 14') das Abgas aus dem ersten (C1, C7) und zweiten Zylinder (C2, C8) der bzw. jeder Zylinderreihe (1/1, 1/2) vollständig zur Ladeluftsammelleitung (2) rückführbar ist, und

   - in der Zwischenposition, die ebenfalls während Abgasrückführbetriebsphasen eingestellt ist, die Abgassammelleitung (4, 4') zwischen erstem (C1, C7) und zweitem Zylinder (C2, C8) der bzw. einer oder jeder Zylinderreihe (1/1, 1/2) abgesperrt ist, so dass bei gleichzeitig auf Volldurchlass geschaltetem Umschaltorgan

(14, 14') das Abgas des ersten Zylinders (C1, C7) der bzw. jeder Zylinderreihe (1/1, 1/2) vollständig zur Ladeluftsammelleitung (2) rückführbar ist.

9. Hubkolbenbrennkraftmaschine nach Anspruch 2, **dadurch gekennzeichnet, dass** jedes der Umschalt- und/oder Regelorgane (15, 15', 16, 16') durch Befehle der Steuereinheit (12) in zwei verschiedene Endstellungen, vorzugsweise aber auch in wenigstens eine Zwischenposition einstellbar ist, wobei

   - deren erste Endstellung jeweils außerhalb von Abgasrückführbetriebsphasen eingestellt ist und dabei das aus allen Zylindern der bzw. jeder Zylinderreihe (1/1, 1/2) ausgestoßene Abgas vollständig über die Abgassammelleitung (4/1, 4/1', 4/2, 4/2') dem Abgasturbolader (6) zugeführt wird,

   - deren zweite Endstellung während Abgasrückführbetriebsphasen einstellbar ist und dabei die Abgassammelleitung (4/1, 4/1', 4/2, 4/2') an der Einmündungsstelle des Auslasskanals (5) der Zylinder (C1, C6, bzw. C1, C4, C7, C10) der bzw. jeder Zylinderreihe (1/1, 1/2) zum Abgasturbolader (6) hin absperrbar ist, demzufolge das Abgas aus den Zylindern (C1, C6 bzw. C1, C4, C7, C10) der bzw. jeder Zylinderreihe (1/1, 1/2) vollständig zur Ladeluftsammelleitung (2) rückführbar ist, und

   - in den ebenfalls während Abgasrückführbetriebsphasen eingestellten Zwischenpositionen ein Teil des aus jedem der Zylinder (C1, C6, bzw. C1, C4, C7, C10) der bzw. jeder Zylinderreihe (1/1, 1/2) austretenden Abgases in der Abgassammelleitung (4/1, 4/1', 4/2, 4/2') gezielt gedrosselt bzw. abgezweigt zum Abgasturbolader (6) hin durchgelassen, der andere Teil des aus diesen Zylindern austretenden Abgases dagegen zur Ladeluftsammelleitung (2) rückgeführt wird.

10. Hubkolbenbrennkraftmaschine nach einem oder mehreren der vorhergehenden Ansprüche, **dadurch gekennzeichnet, dass** jedem Umschaltund/oder Regelorgan (13, 13', 14, 14', 15, 15', 16, 16') ein zu dessen Ein- bzw. Verstellung dienender Stellmotor (18) mit Motortreiberteil (19) als Teile der Abgasrückführungs-Steuervorrichtung (11) zugeordnet ist, und dass jeder Motortreiberteil (19) durch von der Steuereinheit (12) ausgegebene Steuerbefehle angesteuert wird.

11. Hubkolbenbrennkraftmaschine nach Anspruch 10, **dadurch gekennzeichnet, dass** die Steuereinheit (12) einen Mikroprozessor sowie Daten- und Programmspeicher mit darin abgelegtem Steuerprogramm und Betriebs- sowie Kennfelddaten enthält, die auf den Typ der Hubkolbenbrennkraftmaschine (1) abgestimmt sind sowie den Steuer- bzw. Regelalgorithmus und die Zeitpunkte vorgeben, wann und wie, in welchen Betriebsphasen der Hubkolbenbrennkraftmaschine (1) eine Abgasrückführung mit welchen einstellbaren Abgasrückführraten durchgeführt oder unterbunden werden soll.

12. Hubkolbenbrennkraftmaschine nach den Ansprüchen 1 und 2, **dadurch gekennzeichnet, dass** durch entsprechende Einstellung der Umschaltund/oder Regelorgane (13, 13', 14, 14', 15, 15', 16, 16') während der Abgasrückführbetriebsphasen Abgas mit einer sich etwa aus der Formel

$$\frac{100 \times 2}{Zylinderanzahl\ je\ Zylinderreihe}[\%]$$

ergebenden maximalen Rückführrate oder einer demgegenüber kleineren Abgasrückführrate rückführbar ist.

## Claims

1. Multi-cylinder reciprocating-piston internal combustion engine (1) with turbocharger (7, 8) and a device for exhaust-gas recirculation and with at least three cylinders (C1-C6; C7-C12) per cylinder bank (1/1, 1/2), which engine (1) also has, per cylinder, at least one intake valve in an intake duct (3) connected with a charge-air header pipe (2) and at least one exhaust valve in an exhaust duct (5) connected with an exhaust-gas header pipe (4), and, in addition, an exhaust-gas-recirculation pipe (9, 9') between the exhaust-gas header pipe (4) and the charge-air header pipe (2) and control and regulating organs (13, 13', 14, 15) for the recirculation of exhaust gases, **characterised by** a exhaust-gas-recirculation control unit (11) with two changeover and/or regulating organs (13, 13', 14, 14') per cylinder bank (1/1, 1/2), whereby the first changeover and/or regulating organ (13, 13') for each cylinder bank (1/1, 1/2) is installed in the exhaust-gas header pipe (4/4'), namely in the discharge area of the exhaustgas duct (5) of the second cylinder (C2, C8) and the second changeover and/or regulating organ (14, 14') for each cylinder bank (1/1, 1/2) is installed in the exhaust-gas header pipe (4, 4') in the discharge area of the exhaust-gas duct (5) of the first cylinder (C1, C7) from which the exhaust-gas-recirculation duct (9, 9') also branches off and that each of these changeover and/or regulating organs (13, 13', 14, 14') thus arranged in the exhaust-system branch can be actuated and set by commands from a control unit (12) in such a way that during phases in which the exhaust-gas-recirculation system is in operation the exhaust gas discharged from at least two cylinders of one or each cylinder bank (1/1, 1/2) can be returned completely or partially at a set exhaust-gas return rate via the exhaust-gas-recirculation pipe (9, 9') to the charge-air header pipe (2), whereas outside said phases in which the exhaust-gas-recirculation system is in operation the exhaust gas from all cylinders of the/each cylinder bank (1/2, 1/2) can be completely supplied to the turbocharger (6) via the exhaust-gas header pipe (4, 4').

2. Multi-cylinder reciprocating-piston internal combustion engine (1) with turbocharger (7, 8) and a device for exhaust-gas recirculation and with at least three cylinders (C1-C6; C7-C12) per cylinder bank (1/1, 1/2), which engine (1) also has, per cylinder, at least one intake valve in an intake duct (3) connected with a charge-air header pipe (2) and at least one exhaust valve in an exhaust duct (5) connected with an exhaust-gas header pipe (4), and, in addition, an exhaust-gas-recirculation pipe (9/1, 9/1', 9/2, 9/2') between the exhaust-gas header pipe (4) and the charge-air header pipe (2) and control and regulating organs (15, 15', 16, 16') for the recirculation of exhaust gases, **characterised by** an exhaust-gas-recirculation control unit (11) with two changeover and/or regulating organs (15, 15', 16, 16') per cylinder bank (1/1, 1/2), of which the first organ (15, 15') is installed in the discharge area of the exhaust duct (5) of the first cylinder (C1, C7) and of the associated exhaust-gas header pipe (4/1, 4/1') and the second organ (16, 16') is installed in the discharge area of the exhaust duct (5) of the last (C6) or of the fourth cylinder (C4, C10) of the/each cylinder bank (1/1, 1/2) and of the associated exhaust-gas header pipe (4/2, 4/2') and that each of these changeover and/or regulating organs (15, 15', 16, 16') thus arranged in the exhaust-system branch can be actuated and set by commands from a control unit (12) in such a way that during phases in which the exhaust-gas-recirculation system is in operation the exhaust gas discharged from at least two cylinders of one or each cylinder bank (1/1, 1/2) can be returned completely or partially at a set exhaust-gas return rate via the exhaust-gas-recirculation pipe (9, 9', 9/1, 9/1', 9/2, 9/2') to the charge-air header pipe (2), whereas outside said phases in which the exhaust-gas-recirculation system is in operation the exhaust gas from all cylinders of the/each cylinder bank (1/1, 1/2) can be completely supplied to the turbocharger (6) via the exhaust-gas header pipe (4/1, 4/1', 4/2, 4/2').

3. Multi-cylinder reciprocating-piston internal combustion engine according to Claim 1, **characterised in that** the changeover and/or regulating organs (13, 13', 14, 14') can be set to two different end positions and at least one intermediate position by commands from the control unit (12).

4. Multi-cylinder reciprocating-piston internal combustion engine according to Claim 3, **characterised in that** in different types of application the changeover and/or regulating organs (13, 13', 14, 14') have different functions, namely as follows:

> Variant a) control organ (13, 13') and changeover organ (14, 14')
> Variant b) control organ (13, 13') and control organ (14, 14')
> Variant c) changeover organ (13, 13') and changeover organ (14, 14').

5. Multi-cylinder reciprocating-piston internal combustion engine according to Claim 4, **characterised in that** in the case of the variants a) and c) the changeover organ (14, 14') is set to an intermediate position shutting off the exhaust-gas-recirculation pipe (9, 9') by commands from the control unit (12) outside the phases in which the exhaust-gas-recirculation system is in operation, whereas during phases in which the exhaust-gas-recirculation system is in operation it can be set — depending on how high the exhaust-gas return rate is to be and whether the exhaust gas only from the first cylinder (C1, C7) or the exhaust gas from the first and second cylinders (C1, C2, C7, C8) of each cylinder bank is to be returned - either to its first end position in which only the exhaust gas from the first cylinder (C1, C7) of each cylinder bank (1/1,1/2) can be returned or to its second end position in which the exhaust gas of the first and second cylinders (C1, C2, C7, C8) of each cylinder bank (1/1, 1/2) can be returned.

6. Multi-cylinder reciprocating-piston internal combustion engine according to Claim 4, **characterised in that** in the case of variant b) the regulating organ (14, 14') is set to an intermediate position shutting off the exhaust-gas-recirculation pipe (9, 9') by commands from the control unit (12) outside the phases in which the exhaust-gas-recirculation system is in operation, whereas during phases in which the exhaust-gas-recirculation system is in operation it can be set - depending on how high the exhaust-gas return rate is to be and whether the exhaust gas only from the first cylinder (C1, C7) or the exhaust gas from the first and second cylinders (C1, C2, C7, C8) of each cylinder bank is to be returned - either to its first end position in which only the exhaust gas from the first cylinder (C1, C7) of each cylinder bank (1/1, 1/2) can be returned or to its second end position in which the exhaust gas from the first and second cylinders (C1, C2, C7, C8) of each cylinder bank (1/1, 1/2) can be returned or to a throttling position between the second end position and the intermediate position for fine-adjusting the exhaust-gas recirculation rate.

7.  Multi-cylinder reciprocating-piston internal combustion engine according to the Claims 4 to 6, **characterised in that** in the case of the variants a) and b) the regulating organ (13, 13') can be set to two different end position and at least one intermediate position by means of commands from the control unit (12), whereby

    •   the first end position is set outside the phases in which the exhaust-gas-recirculation system is in operation and, if the exhaust-gas-recirculation pipe (9, 9') is shut off, the exhaust gas discharged from all cylinders of the/each cylinder bank (1/1, 1/2) is completely supplied to the turbocharger (6) via the exhaust-gas header pipe (4, 4') switched to passage mode,

    •   the second end position is set during the phases in which the exhaust-gas-recirculation system is in operation and the exhaust-gas header pipe (4, 4') is shut off towards the turbocharger (6) at the discharge point of the exhaust duct (5) of the second cylinder (C2, C8) of the/each cylinder bank (1/1, 1/2), so that if the changeover organ (14, 14') is simultaneously switched to full flow the exhaust gas from the first (C1, C7) and second cylinder (C2, C8) of the/each cylinder bank (1/1, 1/2) can be returned to the charge-air header pipe (2) completely,

    •   in a first intermediate position, which is also set during the phases in which the exhaust-gas-recirculation system is in operation, the exhaust-gas header pipe (4, 4') between the first (C1, C7) and second cylinder (C2, C8) of the/each cylinder bank (1/1, 1/2) is shut off, so that if the changeover organ (14, 14') is simultaneously switched to full flow the exhaust gas from the first cylinder (C1, C7) of the/each cylinder bank (1/1, 1/2) can be returned to the charge-air header pipe (2) completely, whereas the exhaust gas from the second cylinder (C2, C8) of the cylinder bank can be completely fed into the exhaust-gas header pipe (4, 4') and, just like exhaust gas from the following cylinders of the/each cylinder bank (1/1, 1/2), be supplied to the turbocharger (6),

    •   in further intermediate positions which can also be set between the first intermediate position and one of the two end positions during the phases in which the exhaust-gas-recirculation system is in operation, a portion of the exhaust gas from the first (C1, C7) and the second cylinders (C2, C8) of the/each cylinder bank (1/1, 1/2) can, in the exhaust-gas header pipe (4, 4'), be purposefully throttled and channelled to the turbocharger (6), the other portion of the exhaust gas from the first (C1, C7) and the second cylinders (C2, C8) of the/each cylinder bank (1/1, 1/2), however, being returned to the charge-air header pipe (2).

8.  Multi-cylinder reciprocating-piston internal combustion engine according to the Claims 4 and 5, **characterised in that** in the case of the variant c) the changeover organ (13, 13') can be set by commands from the control unit (12) to two different end positions and one intermediate position, whereby

    •   the first end position outside the phases in which the exhaust-gas-recirculation system is in operation is set so that if the exhaust-gas-recirculation pipe (9, 9') is shut off, the exhaust gas discharged from all cylinders of the/each cylinder bank (1/1, 1/2) is completely supplied to the turbocharger (6) via the exhaust-gas header pipe (4) switched to passage mode,

    •   the second end position is set during the phases in which the exhaust-gas-recirculation system is in operation so that the exhaust-gas header pipe (4, 4') is shut off at the discharge point of the exhaust duct (5) of the second cylinder (C2, C8) of the/each cylinder bank (1/1, 1/2) to the turbocharger (6) and if the changeover organ (14, 14') is simultaneously switched to full flow the exhaust gas from the first (C1, C7) and second cylinders (C2, C8) of the/each cylinder bank (1/1, 1/2) can be returned to the charge-air header pipe (2) completely, and

    •   in the intermediate position, which is also set during the phases in which the exhaust-gas-recirculation system is in operation, the exhaust-gas header pipe (4, 4') is shut off between the first (C1, C7) and second cylinders (C2, C8) of one or each cylinder bank (1/1, 1/2) so that if the changeover organ (14, 14') is simultaneously switched to full flow the exhaust gas from the first cylinder (C1, C7) of each cylinder bank (1/1, 1/2) can be returned to the charge-air header pipe (2) completely.

9.  Multi-cylinder reciprocating-piston internal combustion engine according to Claim 2, **characterised in that** each of the changeover and/or regulating organs (15, 15', 16, 16') can be set by commands from the control unit (12) to two different end positions, but preferably also to at least one intermediate position, whereby

- its first end position is set outside the phases in which the exhaust-gas-recirculation system is in operation and the exhaust gas discharged from all cylinders of the/each cylinder bank (1/1, 1/2) is completely supplied to the turbocharger (6) via the exhaust-gas header pipe (4/1, 4/1'. 4/2, 4/2'),

- its second end position can be set during the phases in which the exhaust-gas-recirculation system is in operation and the exhaust-gas header pipe (4/1, 4/1', 4/2, 4/2') can be shut off towards the turbocharger (6) at the discharge point of the exhaust duct (5) of the cylinders (C1, C6 and C1, C4, C7, C10) of the/each cylinder bank (1/1, 1/2), so that the exhaust gas from the cylinders (C1, C6 and C1, C4, C7, C10) of the/each cylinder bank (1/1,1/2) can be returned to the charge-air header pipe (2) completely, and

- in the intermediate positions also set during the phases in which the exhaust-gas-recirculation system is in operation a portion of the exhaust gas discharged from each of the cylinders (C1, C6 and C1, C4, C7, C10) of the/each cylinder bank (1/1, 1/2) can, in the exhaust-gas header pipe (4/1, 4/1', 4/2, 4/2'), be purposefully throttled and channelled to the turbocharger (6), the other portion of the exhaust gas from these cylinders being returned to the charge-air header pipe (2).

10. Multi-cylinder reciprocating-piston internal combustion engine according to one or several of the foregoing Claims, **characterised in that** to each changeover and/or regulating organ (13, 13', 14, 14', 15, 15', 16, 16') a pilot motor (18) with motor drive unit (19) is allocated as part of the exhaust-gas-recirculation control unit (11), serving for the setting and adjusting of said changeover and/or regulating organs and that each motor drive unit (19) is triggered by the control commands emitted by the control unit (12).

11. Multi-cylinder reciprocating-piston internal combustion engine according to Claim 10, **characterised in that** the control unit (12) contains a microprocessor and data and program memories with a control program and operating and map data stored therein, adapted to the type of multi-cylinder reciprocating-piston internal combustion engine (1) and specifying the control and regulating algorithm and the points in time when and how and in which operating phases of the multi-cylinder reciprocating-piston internal combustion engine exhaust-gas recirculation is to be effected or subdued and with which settable exhaust-gas-recirculation rates.

12. Multi-cylinder reciprocating-piston internal combustion engine according to the Claims 1 and 2, **characterised in that** by correspondingly setting the changeover and/or regulating organs (13, 13', 14, 14', 15, 15', 16, 16') during phases in which the exhaust-gas-recirculation system is in operation exhaust gas can be returned at a maximum recirculation rate or at a rate smaller than said maximum rate, whereby the rate is calculated for example on the basis of the formula

$$\frac{100\text{x}2}{number\ of\ cylinders\ per\ cylinder\ bank}[\%]$$

**Revendications**

1. Moteur à combustion interne multicylindre à pistons alternatifs (1) avec turbocompresseur à gaz d'échappement (7, 8) et dispositif de recyclage des gaz d'échappement ainsi qu'avec au moins trois cylindres (C1-C6, C7-C12) par banc de cylindres (1/1, 1/2), qui présente de plus pour chaque cylindre au minimum une soupape d'admission dans un conduit d'admission (3) relié à une conduite collectrice d'air de suralimentation (2) et au minimum une soupape d'échappement dans un conduit d'échappement (5) relié à une conduite collectrice de gaz d'échappement (4), de plus une conduite de recyclage des gaz d'échappement (9, 9') entre la conduite collectrice de gaz d'échappement (4) et la conduite collectrice d'air de suralimentation (2) ainsi que des organes de commande et de régulation (13, 13', 14, 14') pour assurer le recyclage des gaz d'échappement, **caractérisé par** un dispositif de commande de recyclage des gaz d'échappement (11) avec, à chaque banc de cylindres (1/1, 1/2), deux organes de commutation et/ou de régulation (13, 13', 14, 14'), auquel cas le premier organe (13, 13') est monté pour chaque banc de cylindres (1/1, 1/2) dans la conduite collectrice de gaz d'échappement (4, 4'), à cet endroit dans la zone d'embouchure du conduit d'échappement (5) du deuxième cylindre (C2, C8) et le deuxième organe (14, 14') est monté pour chaque banc de cylindres (1/1, 1/2) dans la zone d'embouchure du conduit d'échappement (5) du premier cylindre (C1, C7), duquel dérive également la conduite de recyclage des gaz d'échappement (9, 9'), et **caractérisé en ce que** chacun de ces organes de commutation et/ou de régulation (13, 13', 14, 14') disposés de cette manière dans la ligne d'échappement peut être actionné ou réglé par l'intermédiaire d'instructions envoyées par une unité de commande (12) de telle façon que, pendant les phases de fonctionnement de recyclage des gaz d'échappement, les gaz d'échappement émis par au moins deux cylindres d'un ou de chaque banc de cylindres (1/1, 1/2) sont recyclables en totalité ou en partie par le biais de la conduite de recyclage de gaz d'échappement (9, 9') vers la conduite collectrice d'air de suralimentation (2) selon un taux défini de recyclage de gaz d'échappement et, par contre, les gaz d'échappement de tous les cylindres du ou de chaque banc de cylindres (1/1, 1/2) peuvent être amenés, en dehors des phases de fonctionnement de recyclage des gaz d'échappement, en totalité au turbocompresseur à gaz d'échappement (6) via la conduite collectrice de gaz d'échappement (4, 4').

2. Moteur à combustion interne multicylindre à pistons alternatifs (1) avec turbocompresseur à gaz d'échappement (7, 8) et dispositif de recyclage des gaz d'échappement ainsi qu'avec au moins trois cylindres (C1-C6, C7-C12) par banc de cylindres (1/1, 1/2) qui présente en outre par cylindre au minimum une soupape d'admission dans un conduit d'admission (3) relié à une conduite collectrice d'air de suralimentation (2) et au minimum une soupape d'échappement dans un conduit d'échappement (5) relié à une conduite collectrice de gaz d'échappement (4), en supplément une conduite de recyclage des gaz d'échappement (9, 9/1, 9/1', 9/2, 9/2') entre la conduite collectrice de gaz d'échappement (4) et la conduite collectrice d'air de suralimentation (2) ainsi que des organes de commande et de régulation (15, 15', 16, 16'), **caractérisé par** un dispositif de commande de recyclage des gaz d'échappement (11) avec, à chaque banc de cylindres (1/1, 1/2), deux organes de commutation et/ou de régulation (15, 15', 16, 16'), parmi lesquels le premier organe (15, 15') est monté dans la conduite collectrice de gaz d'échappement dans la zone d'embouchure du conduit d'échappement (5) du premier cylindre (C1, C7) et de la conduite collectrice de gaz d'échappement (4/1, 4/1') et le deuxième organe (16, 16') est monté dans la conduite collectrice de gaz d'échappement dans la zone d'embouchure du conduit d'échappement (5) du dernier cylindre ou, à chaque fois, du quatrième cylindre (C4, C10) du ou de chaque banc de cylindres (1/1, 1/2) et de la conduite collectrice de gaz d'échappement (4/2, 4/2'), et **caractérisé en ce que** chacun de ces organes de commutation et/ou de régulation (15, 15', 16, 16') disposés de cette manière dans la ligne d'échappement peut être actionné ou réglé par l'intermédiaire d'instructions envoyées par une unité de commande (12) de telle façon que, pendant les phases de fonctionnement de recyclage des gaz d'échappement, les gaz d'échappement émis par au moins deux cylindres d'un ou de chaque banc de cylindres (1/1, 1/2) sont recyclables en totalité ou en partie par le biais de la conduite de recyclage de gaz d'échappement (9, 9', 9/1, 9/1', 9/2, 9/2') vers la conduite collectrice d'air de suralimentation (2) selon un taux défini de recyclage de gaz d'échappement et, par contre, les gaz d'échappement de tous les cylindres du ou de chaque banc de cylindres (1/1, 1/2) peuvent être amenés, en dehors des phases de fonctionnement de recyclage des gaz d'échappement, en totalité au turbocompresseur à gaz d'échappement (6) via la conduite collectrice de gaz d'échappement (4/1, 4/1', 4/2, 4/2').

3. Moteur à combustion interne à pistons alternatifs selon la revendication 1, **caractérisé en ce que** les organes de commutation et/ou de régulation (13, 13', 14, 14') peuvent être réglés par l'intermédiaire d'instructions envoyées par un appareil de commande (12) dans deux positions finales différentes et dans au moins deux positions intermédiaires.

4. Moteur à combustion interne à pistons alternatifs selon la revendication 3, **caractérisé en ce que** les organes de commutation et de régulation (13, 13', 14, 14') possèdent différentes fonctions selon les cas d'application, à savoir comme suit :

   Variante a) Organe de régulation (13, 13') et organe de commutation (14, 14')

   Variante b) Organe de régulation (13, 13') et organe de régulation (14, 14')

   Variante c) Organe de commutation (13, 13') et organe de commutation (14, 14')

5. Moteur à combustion interne à pistons alternatifs selon la revendication 4, **caractérisé en ce que**, dans le cas des variantes a) et c), l'organe de commutation (14, 14') est réglé dans une position intermédiaire obturant la conduite de recyclage des gaz d'échappement (9, 9') en dehors des phases de fonctionnement de recyclage des gaz d'échappement par l'intermédiaire d'instructions envoyées par l'unité de commande (12) et, par contre, est réglable pendant la phase de fonctionnement de recyclage des gaz d'échappement - en fonction du taux de recyclage des gaz d'échappement défini ou si les gaz d'échappement du premier cylindre (C1, C7) seulement ou les gaz d'échappement du premier et deuxième cylindre (C1, C2, C7, C8) de chaque banc de cylindres doivent être reconduits - soit dans sa première position finale dans laquelle seuls les gaz d'échappement de chaque premier cylindre (C1, C7) par banc de cylindre (1/1, 1/2) sont recyclables, soit dans sa deuxième position finale dans laquelle les gaz d'échappement du premier et deuxième cylindre (C1, C2, C7, C8) de chaque banc de cylindres (1/1, 1/2) sont ensuite recyclables.

6. Moteur à combustion interne à pistons alternatifs selon les revendications 4 à 6, **caractérisé en ce que**, dans le cas de la variante b), l'organe de régulation (14, 14') est réglé dans une position intermédiaire obturant la conduite de recyclage des gaz d'échappement (9, 9') en dehors des phases de fonctionnement de recyclage des gaz d'échappement par l'intermédiaire d'instructions envoyées par l'unité de commande (12) et, par contre, est réglable pendant la phase de fonctionnement de recyclage des gaz d'échappement - en fonction du taux de recyclage des gaz d'échappement ou si les gaz d'échappement du premier cylindre (C1, C7) seulement ou les gaz d'échappement du premier et du deuxième cylindre (C1, C2, C7, C8) de chaque banc de cylindres doivent être recyclés - soit dans sa première position finale dans laquelle seuls les gaz d'échappement du premier cylindre (C1, C7) de chaque banc de cylindres (1/1, 1/2) sont recyclables, soit dans sa deuxième position dans laquelle les gaz d'échappement aussi bien du premier que du deuxième cylindre (C1, C2, C7, C8) de chaque banc de cylindres (1/1, 1/2) sont recyclables, soit dans une position d'étranglement entre la deuxième position finale et la position intermédiaire fixe pour régler précisément le taux de recyclage des gaz d'échappement.

7.  Moteur à combustion interne à pistons alternatifs selon les revendications 4 à 6, **caractérisé en ce que**, dans le cas des variantes a) et b), l'organe de régulation (13, 13') est réglable dans deux positions finales différentes et dans au moins une position intermédiaire par l'intermédiaire d'instructions envoyées par l'unité de commande (12), auquel cas

    -   la première position finale est réglée en dehors des phases de fonctionnement de recyclage des gaz d'échappement et, à cette occasion lorsque la conduite de recyclage de gaz d'échappement (9, 9') est obturée, les gaz d'échappement émis par tous les cylindres du ou de chaque banc de cylindres (1/1, 1/2) sont amenés en totalité au turbocompresseur à gaz d'échappement par l'intermédiaire de la conduite collectrice de gaz d'échappement (4, 4') commutée sur passage des gaz,

    -   la deuxième position finale est réglée pendant les phases de fonctionnement de recyclage des gaz d'échappement et, à cette occasion, la conduite de recyclage des gaz d'échappement (4, 4') est obturée à l'endroit d'embouchure du conduit d'échappement (5) du deuxième cylindre (C2, C8) du ou de chaque banc de cylindres (1/1, 1/2) en direction du turbocompresseur à gaz d'échappement (6) de telle manière que, lorsque l'organe de commutation (14, 14') est commuté en même temps sur passage totale des gaz, les gaz d'échappement provenant du premier (C1, C7) et du deuxième cylindre (C2, C8) du ou de chaque banc de cylindres (1/1, 1/2) sont recyclables en totalité vers la conduite collectrice d'air de suralimentation,

-   la conduite collectrice de gaz d'échappement (4, 4') entre le premier (C1, C7) et le deuxième cylindre (C2, C8) du ou de chaque banc de cylindres (1/1, 1/2) est obturée dans une première position intermédiaire réglée également pendant les phases de fonctionnement du recyclage des gaz d'échappement de telle manière que, lorsque l'organe de commutation (14, 14') est commuté simultanément sur passage total des gaz, les gaz d'échappement du premier cylindre (C1, C7) du ou de chaque banc de cylindres (1/1, 1/2) sont recyclables en totalité vers la conduite collectrice d'air de suralimentation et, par contre, les gaz d'échappement du deuxième cylindre (C2, C8) du banc de cylindres peuvent être acheminés en totalité vers la conduite collectrice de gaz d'échappement (4, 4') et, comme n'importe quel cylindre suivant du ou de chaque banc de cylindres (1/1, 1/2), peuvent également être amenés au turbocompresseur à gaz d'échappement,

-   dans d'autres positions intermédiaires qui peuvent être réglées pendant les phases de fonctionnement de recyclage des gaz d'échappement entre la première position intermédiaire et l'une des deux positions finales, une partie des gaz d'échappement émis par le premier (C1, C7) et le deuxième cylindre (C2, C8) du ou de chaque banc de cylindres (1/1, 1/2) est étranglée de manière ciblée ou laissée passer de manière dérivée vers le turbocompresseur à gaz d'échappement (6) tandis que l'autre partie des gaz d'échappement émis par le premier (C1, C7) et le deuxième cylindre (C2, C8) du ou de chaque banc de cylindres (1/1, 1/2) est par contre recyclée vers la conduite collectrice d'air de suralimentation.

8.  Moteur à combustion interne à pistons alternatifs selon les revendications 4 et 5, **caractérisé en ce que**, dans le cas de la variante c), l'organe de commutation (13, 13') est réglable dans deux positions différentes et une position intermédiaire par le biais d'instructions envoyées par l'unité de commande (12), auquel cas

    -   la première position finale est réglée en dehors des phases de fonctionnement de recyclage des gaz d'échappement de telle manière que, lorsque la conduite de recyclage des gaz d'échappement (4, 4') est obturée, les gaz d'échappement émis par tous les cylindres du ou de chaque banc de cylindres (1/1, 1/2) sont amenés en totalité au turbocompresseur à gaz d'échappement (6) par l'intermédiaire de la conduite collectrice de gaz d'échappement (4, 4') commutée sur passage libre des gaz.

- la deuxième position finale est réglé pendant les phases de fonctionnement de recyclage des gaz d'échappement de telle manière que la conduite collectrice de gaz d'échappement (4, 4') soit obturée à l'endroit d'embouchure du conduit d'échappement (5) du deuxième cylindre (C2, C8) du ou de chaque banc de cylindres (1/1, 1/2) vers le turbocompresseur à gaz d'échappement (6) et, lorsque l'organe de commutation (14, 14') est commuté simultanément sur passage libre total des gaz, les gaz d'échappement émis par le premier (C1, C7) et le deuxième cylindre (C2, C8) du ou de chaque banc de cylindres (1/1, 1/2) sont recyclables en totalité vers la conduite collectrice de gaz d'échappement, et

- dans la position intermédiaire réglée également pendant les phases de fonctionnement de recyclage des gaz d'échappement, la conduite collectrice de gaz d'échappement (4, 4') entre le premier (C1, C7) et le deuxième cylindre (C2, C8) du ou de chaque banc de cylindres (1/1, 1/2) est obturée de telle manière que, lorsque l'organe de commutation (14, 14') est commuté simultanément sur le passage libre total des gaz, les gaz d'échappement du premier cylindre (C1, C7) du ou de chaque banc de cylindres (1/1, 1/2) sont recyclables en totalité vers la conduite collectrice d'air de suralimentation (2).

9. Moteur à combustion interne à pistons alternatifs selon la revendication 2, **caractérisé en ce que** chacun des organes de commutation et/ou de régulation (15, 15', 16, 16') est réglable dans deux positions différentes, mais également de préférence dans au moins une position intermédiaire par l'intermédiaire d'instructions envoyées par l'unité de commande, auquel cas

- leur première position finale est réglée à chaque fois en dehors des phases de fonctionnement du recyclage des gaz d'échappement et, à cette occasion, les gaz d'échappement émis par tous les cylindres du ou de chaque banc de cylindres (1/1, 1/2) sont amenés en totalité au turbocompresseur à gaz d'échappement (6) par l'intermédiaire de la conduite collectrice de gaz d'échappement (4/1, 4/1', 4/2, 4/2'),

- leur deuxième position est réglable pendant les phases de fonctionnement de recyclage des gaz d'échappement et, à cette occasion, la conduite collectrice de gaz d'échappement (4/1, 4/1', 4/2, 4/2') est obturable à l'endroit de l'embouchure du conduit d'échappement (5) du cylindre (C1, C6 ou C1, C4, C7, C10) du ou de chaque banc de cylindres (1/1, 1/2) en direction du turbocompresseur à gaz d'échappement (6) et, par conséquent, les gaz d'échappement des cylindres (C1, C6 ou C1, C4, C7, C10) du ou de chaque banc de cylindres (1/1, 1/2) sont recyclés en totalité vers la conduite collectrice d'air de suralimentation (2), et

- dans les positions intermédiaires réglées également pendant les phases de fonctionnement de recyclage des gaz d'échappement, une partie des gaz d'échappement émis par chacun des cylindres (C1, C6 ou C1, C4, C7, C10) du ou de chaque banc de cylindres (1/1, 1/2) est étranglée de manière ciblée ou laissée passer de manière dérivée vers le turbocompresseur à gaz d'échappement (6) tandis que l'autre partie des gaz d'échappement émis par ces cylindres sont, par contre, recyclés vers la conduite collectrice d'air de suralimentation.

10. Moteur à combustion interne à pistons alternatifs selon une quelconque ou plusieurs revendications mentionnées précédemment, **caractérisé en ce qu'**à chaque organe de commutation et/ou de régulation (13, 13', 14, 14', 15, 15', 16, 16'), un servomoteur (18) servant à leur réglage et à leur déplacement avec partie d'entraînement du moteur (19) est attribué comme composant du dispositif de commande du recyclage des gaz d'échappement (11) et **en ce que** chaque partie d'entraînement du moteur (19) est pilotée par des instructions de commande envoyées par l'unité de commande (12).

11. Moteur à combustion interne à pistons alternatifs selon la revendication 10, **caractérisé en ce que** l'unité de commande (12) comporte un microprocesseur ainsi qu'une mémoire de données et de programme avec un programme de commande mémorisée dedans et des données de service et des courbes caractéristiques, qui sont adaptées au type de moteur à combustion interne multicylindre à pistons alternatifs (1) et spécifient l'algorithme de commande et de régulation ainsi que les moments quand, comment et dans quelles phases de fonctionnement du moteur à combustion interne multicylindre à pistons alternatifs (1), un recyclage des gaz d'échappement doit être exécuté selon quel taux de recyclage de gaz d'échappement ou stoppé.

12. Moteur à combustion interne à pistons alternatifs selon les revendications 1 et 2, **caractérisé en ce que**, grâce au réglage correspondant des organes de commutation et/ou de réglage (13, 13', 14, 14', 15, 15', 16, 16') pendant les phases de fonctionnement de recyclage des gaz d'échappement, les gaz d'échappement sont recyclables selon un taux de recyclage maximal obtenu, par exemple, à partir de la formule

$$\frac{100 \times 2}{\text{Nbr. de cylindres par banc}} \, [\%]$$

ou selon un taux de recyclage des gaz d'échappement au contraire plus faibles.

Fig. 1

Fig. 2

Fig.3

Fig. 4